# EUROPÄISCHE PATENTSCHRIFT

(11) **EP 3 156 354 B1**
(45) Veröffentlichungstag und Bekanntmachung des Hinweises auf die Patenterteilung: **25.01.2023**
(21) Anmeldenummer: 16181382.9
(22) Anmeldetag: 27.07.2016
(51) Int. Cl.: B65G 54/02, F16B 17/00, H02K 41/03

(54) **AUFNAHME ZUM VERBINDEN EINES ENDES EINES STATORELEMENTES MIT EINEM ENDE EINES ANDEREN STATORELEMENTES IN EINER FÖRDERSTRECKE**
HOLDER FOR CONNECTING ONE END OF A STATOR WITH ONE END OF ANOTHER STAOR IN A CONVEYING PATH
SUPPORT POUR CONNECTER UNE EXTRÉMITÉ D'UN STATOR AVEC UNE EXTRÉMITÉ D'UN AUTRE STATOR DANS UN CHEMIN DE CONVOYAGE

(30) Priorität: 28.07.2015 AT 506772015
(43) Veröffentlichungstag der Anmeldung: 19.04.2017
(73) Patentinhaber: B&R Industrial Automation GmbH, 5142 Eggelsberg (AT); Krones AG, 93073 Neutraubling (DE)
(72) Erfinder: Reinthaler, Michael, 5223 Pfaffstätt (AT); Höck, Martin, 5121 Ostermiething (AT); Senn, Konrad, 93087 Alteglofsheim (DE); Neubauer, Michael, 83224 Grassau (DE); Elsperger, Stefan, 83139 Söchtenau (DE)
(74) Vertreter: Patentanwälte Pinter & Weiss OG

(56) Entgegenhaltungen:
- US-A1- 2006 016 366
- US-A1- 2009 178 772
- US-B1- 6 769 553

## Beschreibung

Die vorliegende Erfindung befasst sich mit Förderstrecke gebildet aus zumindest einem ersten Statorelement und zumindest einem zweiten Statorelement eines Stators eines Langstatorlinearmotors und zumindest einer Aufnahme, wobei die zumindest eine Aufnahme ein erstes Halteelement und ein zweites Halteelement aufweist, wobei das erste Halteelement und das zweite Halteelement nebeneinander und in einer ersten Richtung voneinander beabstandet angeordnet sind, wobei das erste Halteelement mit dem zweiten Halteelement an deren ersten Enden verbunden ist, wobei das erste und das zweite Statorelement in der ersten Richtung voneinander beabstandet sind, wobei das erste Statorelement und das zweite Statorelement unmittelbar benachbart sind, wobei das erste Statorelement und das zweite Statorelement jeweils ein erstes Statorelementsende und ein zweites Statorelementsendeaufweist, wobei sich das erste Statorelementsende des zweiten Statorelements und das zweite Statorelementsende des ersten Statorelements gegenüberstehen, wobei das erste Statorelementsende des zweiten Statorelements mit dem ersten Halteelement der Aufnahme, und das zweite Statorelementsende des ersten Statorelements mit dem zweiten Halteelement der Aufnahme verbunden ist.

Gerade bei modernen bzw. komplexen Logistik- und Fördersystemen besteht jedoch oftmals das Erfordernis, dass unterschiedliche Bauteile mit unterschiedlichen Transportgeschwindigkeiten, auf ein und derselben Transporteinrichtung gefördert werden müssen. Beispielsweise kann es durch einen Vereinzelungsvorgang zu einem solchen Erfordernis kommen. Um durch das Vereinzeln entstandene Lücken im Produktstrom zu schließen, müssen Bauteile entsprechend beschleunigt oder verzögert, oder zumindest mit unterschiedlichen Geschwindigkeiten bewegt werden. In diesem Zusammenhang werden besonders vorteilhaft Langstatorlinearmotoren, oftmals als LLM bezeichnet, genutzt, um eine entsprechende Förderstrecke zu realisieren.

Der Stator eines Langstatorlinearmotors wird durch eine gewisse Anzahl von elektrischen Antriebsspulen gebildet. Durch deren Aneinanderreihung ergibt sich eine entsprechende Förderstrecke. Die zuvor erwähnten Bauteile werden auf beweglichen Transporteinheiten angeordnet, welche Erregungsmagneten aufweisen. In bekannter Weise können diese Erregungsmagneten als Permanentmagnete oder auch in Form von elektrischen Spulen, also als Elektromagneten, ausgebildet sein.

Die Antriebsspulen des Stators werden häufig einzeln angesteuert, wodurch es zur Regelung eines bewegten Magnetfelds kommt. Die einzelnen Transporteinheiten werden dadurch, je nach dem welche Antriebsspulen angesteuert werden, entlang der Förderstrecke in Bewegung gesetzt. Dadurch, dass die Antriebsspulen unabhängig voneinander angesteuert werden können, können auch mehrere Transporteinheiten auf einer Förderstrecke unabhängig voneinander bewegt werden. Weiters können diese, mithilfe der entsprechenden Steuerung, mit unterschiedlichen Transportgeschwindigkeiten bewegt, bzw. unterschiedlich beschleunigt oder verzögert werden. Dies erlaubt eine optimale Anpassung an die Erfordernisse eines Logistiksystems und bringt damit verbundene, wirtschaftliche Vorteile. Bestehende Anlagen, beispielsweise zur Weiterbearbeitung genannter Bauteile, können optimal ausgenutzt werden, da die Transporteinrichtung unterschiedliche Bauteile in der jeweils bestmöglichen Taktzeit transportieren bzw. anliefern kann und so der Produktstrom optimiert wird. Die geringe Anzahl an Verschleißteilen eines Langstatorlinearmotors reduziert die Wartungskosten, bzw. können einzelne Transporteinheiten ohne größeren Aufwand einfach ausgetauscht werden.

Sind die Antriebsspulen des Stators stromdurchflossen, kommt es auch zu einer entsprechenden Erwärmung des Stators. Da der Stator in einer Aufnahme gehalten bzw. positioniert wird, kommt es aufgrund der Erwärmung und der damit verbundenen Ausdehnung des Stators zu entsprechenden mechanischen Spannungen im Stator. Dies kann wiederum zu entsprechend unerwünschten bzw. unkontrollierten Verformungen führen. Erforderliche Lage- oder Formtoleranzen können in nachvollziehbarer Weise nicht eingehalten werden

Die US 2006/0016366 A1 offenbart eine gattungsgemäße Förderstrecke mit einer Aufnahme für Statorsegmente eines stationären Teils einer Magnetschwebebahn. Die Aufnahme in der Förderstrecke ist ausgebildet eine Vielzahl an Statorsegmenten aufzunehmen, wobei die Aufnahme durchgehend ist. Eine Dehnung aufgrund der Erwärmung erfolgt daher unkontrolliert und kann zu Spannungen oder sogar Rissen in der Aufhängung führen.

Die Aufgabe vorliegenden Erfindung besteht darin, eine Aufnahme zum Tragen, Befestigen und/oder Positionieren eines Bauteils, insbesondere eines Statorelements eines Stators eines Langstatorlinearmotors, zu Verfügung zu stellen, durch welche mechanische Spannungen im Bauteil, aufgrund temperaturbedingter Ausdehnung, möglichst verhindert oder zumindest reduziert werden können.

Die Aufgabe wird durch die kennzeichnenden Merkmale des unabhängigen Anspruchs gelöst.

Eine vorteilhafte Ausgestaltung sieht vor, dass jedes Halteelement ein erstes Ende, welches im bestimmungsgemäßen Einsatz der Aufnahme ortsfest und unbeweglich angeordnet ist, und ein zweites Ende, welches zumindest in die erste Richtung beweglich ist, aufweist. Dies erlaubt eine Montage, beispielsweise an einer Wand oder einer anderen ortsfesten Struktur, wobei die Bewegung eines Halteelements in Folge der zuvor erwähnten Verformung auf das, der ortsfesten Struktur abgewandte Ende eines Halteelements beschränkt ist.

Eine vorteilhafte Ausführungsform sieht vor, dass ein Halteelement U-förmig ausgebildet ist, mit einer am ersten Ende angeordneten Basis und zwei davon abstehenden Armen, wobei zumindest ein Arm die erste Steifigkeit oder die zweite Steifigkeit aufweist. Eine derartige U-förmige Brücke ist besonders vorteilhaft zur Aufnahme eines Bauteils geeignet, da durch die Form ein Umgreifen bzw. Umfassen eines aufzunehmenden Bauteils ermöglicht wird, wodurch dieser besonders gut geführt bzw. gestützt werden kann.

Vorteilhafterweise ist vorgesehen, dass ein Arm in eine zweite Richtung normal auf die erste Richtung eine zusätzliche geringere Steifigkeit aufweist als der andere Arm. Somit wird ein definiertes Verformen in eine weitere Richtung ermöglicht. Wiederum können in einem Bauteil ggf. auftretende Spannungen gezielt abgebaut werden in dem eine Verformung gezielt zugelassen wird.

Dabei ist vorteilhaft vorgesehen, dass der Arm mit der in der zweiten Richtung zusätzlichen geringeren Steifigkeit in der zweiten Richtung geteilt ausgeführt ist. Durch die entsprechende Zweiteilung, beispielsweise durch einen Schlitz, kann die Steifigkeit entsprechend der Erfordernisse, gezielt gesteuert werden. Weiters ergibt sich durch die Zweiteilung die Möglichkeit, eine ggf. auftretende Verformung lediglich auf einen Teilbereich eines Arms des Halteelements zu beschränken.

Erfindungsgemäß ist das erste Halteelement mit dem zweiten Halteelement an deren ersten Enden verbunden. Dadurch ergibt sich eine bessere Handhabbarkeit der Aufnahme, da diese durch lediglich eine gemeinsame Vorrichtung gebildet wird und keine unterschiedlich ausgeführten Bauteile beachtet werden müssen. Auch bei der ortsfesten Montage ergeben sich durch die Verbindung Vorteile durch die vereinfachte Handhabung.

Die erfindungsgemäße Förderstrecke wird aus zumindest einem ersten Statorelement und zumindest einem zweiten Statorelement eines Stators eines Langstatorlinearmotors und zumindest einer zuvor erwähnten Aufnahme gebildet. Dabei sind das erste und das zweite Statorelement in der zuvor erwähnten, ersten Richtung voneinander beabstandet. Das erste Statorelement und das zweite Statorelement weisen jeweils ein erstes Statorelementsende und ein zweites Statorelementsende auf, wobei ein erstes Statorelementsende mit dem ersten Halteelement der Aufnahme und ein zweite Statorelementsende mit dem zweiten Halteelement der Aufnahme verbunden ist. Kommt es im Zuge des Betriebs der Förderstrecke, bzw. des Langsatorlinearmotors, zur Erwärmung eines Statorelements, kann sich dieses durch die geringere Steifigkeit des zweiten Halteelements in eine definierte Richtung verformen. Das erste Halteelement hingegen, stellt mit seiner höheren Steifigkeit die Positionierung des Statorelements sicher.

In einer Ausführungsform, die nicht Teil der Erfindung ist, wird das erste Statorelementsende eines Statorelements mit dem ersten Halteelement der Aufnahme und das zweite Statorelementsende des gleichen Statorelements am zweiten Halteelement der Aufnahme befestigt ist. Ein Statorelement wird somit durch eine Aufnahme gehalten, wobei ein Statorelementsende durch ein Halteelement mit höherer Steifigkeit, und das andere Statorelementsende durch ein Halteelement mit geringerer Steifigkeit gehalten wird. Die beiden Halteelemente sind dabei ein und derselben Aufnahme zugeordnet. Erfindungsgemäß ist vorgesehen, dass das erste Statorelement und das zweite Statorelement unmittelbar benachbart sind. Der Abstand zwischen zwei Statorelementen wird so, möglichst geringgehalten und eine möglichst gleichförmige Förderbewegung ermöglicht.

Dabei ist erfindungsgemäß vorgesehen, dass das erste Statorelementsende des zweiten Statorelements mit dem ersten Halteelement der Aufnahme, und das zweite Statorelementsende des ersten Statorelements mit dem zweiten Halteelement der Aufnahme verbunden ist. Auf diese Weise ist die Aufnahme lediglich in jenen Bereich angeordnet, in welchem sich zwei Statorelementsenden gegenüberstehen. Die Aufnahme kann somit möglichst kompakt gehalten werden. Da die Längserstreckung der Statorelemente somit keinen Einfluss auf die Aufnahme hat, kann eine Aufnahme somit für Statorelemente mit unterschiedlicher Längserstreckung oder auch Formgebung, wie beispielsweise Kurven, genutzt werden.

In vorteilhafter Weise kommt die bereits beschriebene U-förmige Ausführungsvariante eines Halteelements zur Anwendung, wobei die U-förmige Brücke zwischen den von der Basis abstehenden Armen einen Innenbereich aufweist und das zumindest eine erste Statorelement und/oder das zumindest eine zweite Statorelement zumindest teilweise innerhalb des Innenbereichs angeordnet ist. Diese Ausführungsvariante gewährleistet, dass das jeweilige Statorelement optimal abgestützt wird.

In vorteilhafter Weise ist vorgesehen, dass die Förderstrecke ein Führungssystem, zur Führung einer Transporteinrichtung umfasst. Dazu ist am ersten Halteelement eine Befestigungsmöglichkeit in Form zumindest einer Aufnahmebohrung für das Führungssystem, vorgesehen, woran das Führungssystem befestigt ist. Auf diese Weise wird das ersten Halteelement als Träger eines Führungssystems, beispielsweise eines Schienensystems genutzt. Da im Falle der Verformung eines Statorelements jedoch primär das zweite Halteelement, aufgrund seiner geringeren zweiten Steifigkeit, die Verformung ausgleicht, wird das Führungssystem durch dessen Anordnung am ersten Halteelement durch die Verformung des Statorelements nicht beeinflusst.

Die gegenständliche Erfindung wird nachfolgend unter Bezugnahme auf die Figuren 1 bis 5 näher erläutert, die beispielhaft, schematisch und nicht einschränkend vorteilhafte Ausgestaltungen der Erfindung zeigen. Dabei zeigt
Fig.1 ein erstes und ein zweites Halteelement einer Aufnahme
Fig.2 die Aufnahme in einer vorteilhaften Ausgestaltung,
Fig.3 eine weitere Vorteilhafte Ausgestaltung nach Ansicht III in Fig.2
Fig.4 die Verwendung der Aufnahme im Zusammenhang mit einem Statorelement einer Förderstrecke, die nicht Teil der vorliegenden Erfindung ist.
Fig.5 die Verwendung der Aufnahme in einer besonders vorteilhaften Ausgestaltung in einer Ausführungsform der erfindungsgemäßen Förderstrecke

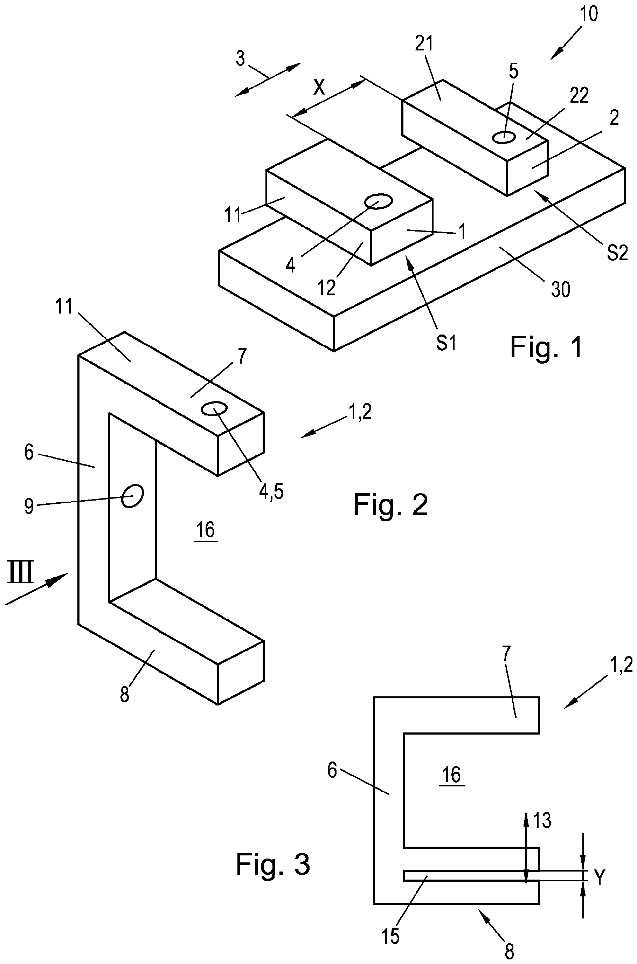

Die Aufnahme 10 umfasst gemäß Figur 1 zumindest ein erstes Halteelement 1 und ein zweites Halteelement 2. Dabei sind das erste Halteelement 1 und das zweite Halteelement 2 nebeneinander und in einer, in Figur 1 in Form eines Doppelpfeils dargestellten, ersten Richtung 3 voneinander beabstandet angeordnet. Das erste Halteelement 1 weist in diese erste Richtung 3 eine erste Steifigkeit S1 und das zweite Halteelement 2 in dieser ersten Richtung 3 eine zweite Steifigkeit S2 auf. Dabei ist zu beachten, dass erfindungsgemäß die zweite Steifigkeit S2 des zweiten Halteelements 2 geringer als die erste Steifigkeit S1 des ersten Halteelements 1 ist.

Im bestimmungsgemäßen Einsatz, der nicht Teil der Erfindung ist, nimmt die Aufnahme 10 einen Bauteil 30 auf. z.B. indem ein Bauteil 30 an der Aufnahme 10 befestigt wird. Beispielsweise kann es zu einer Erwärmung des aufgenommenen Bauteils 30 kommen, wodurch es zwangsläufig zu einer mehr oder weniger ausgeprägten Ausdehnung des Bauteils 30 kommt. Mehr oder weniger ausgeprägt deshalb, da der Effekt der Ausdehnung, in nachvollziehbarer Weise, in der längsten Erstreckung des Bauteils 30 auch am stärksten zum Tragen kommt. Durch die eben beispielhaft genannte Erwärmung, wobei das Einwirken anderer äußerer Kräfte nicht ausgeschlossen ist, wirkt auf beiden Halteelemente 1 und 2 der Aufnahme 10 eine entsprechende Kraft. Dadurch, dass das erste Halteelement 1 eine höhere Steifigkeit S1 aufweist als das zweite Halteelement 2, kommt es kommt es am zweiten Halteelement 2 eher zu einer Verformung in die erste Richtung 3 als am ersten Halteelement 1. Durch die entsprechende Verformung der Halteelemente 1 und 2, wird dem sich erwärmen Bauteil 30 die Möglichkeit gegeben, mechanischen Spannungen durch eine gezielte Ausdehnung zumindest zu reduzieren. Dabei ist zu beachten, dass ein Abstand X in die erste Richtung 3 zwischen ersten Halteelement 1 und zweiten Halteelement 2, wie er in Figur 1 dargestellt ist, so gewählt sein muss, dass es bei einer maximalen zu erwartenden Ausdehnung des zuvor erwähnten Bauteils 30, nicht zu einem Kontakt zwischen ersten und zweiten Halteteil 1 und 2 kommt. Andernfalls würde es frühzeitig zu einer Behinderung der eben beschriebenen Bewegung kommen.

Wie in Figur 1 weiters erkennbar ist, weist jedes der zumindest zwei Halteelemente 1 und 2 ein erstes Ende 11, bzw. 21 auf, welches im bestimmungsgemäßen Einsatz der Aufnahme ortsfest angeordnet ist. Weiters weist das erste Halteelement 1 ein zweites Ende 12, bzw. das zweite Halteelement 2 ebenfalls ein zweites Ende 22 auf, wobei die zweiten Enden 12 und 22 zumindest in die erste Richtung 3 beweglich sind.

Dabei ist vorgesehen, dass im bestimmungsgemäßen Einsatz das erste Ende 11 bzw. 21, beispielsweise an einer Wand oder einer anderen ortsfesten Struktur, befestigt ist. Für die Befestigung können beispielsweise, in der Figur 1 nicht weiter dargestellte, Bohrungen für eine Schraubverbindung in Betracht kommen. Natürlich sind auch andere Fügetechniken wie Schweißen, Kleben und dergleichen durchaus möglich. In dieser Weise ist sowohl das erste Halteelement 2 als auch das zweite Halteelement 2 durch Ihre jeweils ersten Enden 11 bzw. 21 ortsfest und unbeweglich angeordnet. Dadurch ist die Bewegung eines Halteelements 1 und 2, in Folge der zuvor erwähnten Verformung, auf die, der ortsfesten Struktur abgewandten, zweiten Enden 12 und 22 des jeweiligen Halteelement 1 und 2 beschränkt.

Ein zuvor erwähnter Bauteil 30 wird also vorzugsweise an den zweiten Enden 12 und 22 des jeweiligen Halteelement 1 und 2 befestigt. Lediglich beispielhaft, und keinesfalls einschränkend, sind in Figur 1 dafür Aufnahmebohrungen 4 und 5 an den jeweiligen zweiten Enden 12 und 22 dargestellt. Kommt es zu einer zuvor beschriebenen Krafteinleitung auf die Halteelemente 1 und 2, kommt es vorrangig am zweiten Halteelement 2, aufgrund dessen geringerer Steifigkeit S2, zumindest in die erste Richtung 3 zu einer Verformung. Auf diese Weise können die mechanischen Spannungen im Bauteil 30 abgebaut werden. Aufgrund der höheren Steifigkeit S1 des ersten Halteelement 1, bleibt dieses unverformt bzw. verformt sich im Vergleich zum zweiten Halteelement 2 lediglich geringfügig, und der aufgenommene Bauteil 30 bleibt trotz seiner Verformung, in einer definierten Lage.

In Bezug auf die beiden Halteelemente 1 und 2 kann beispielsweise vorgesehen sein, dass sowohl das erste Halteelement 1 als auch das zweite Halteelemente 2 aus demselben Werkstoff gefertigt ist. Wie in Figur 1 lediglich schematisch dargestellt ist, wird in diesem Fall die geringere Steifigkeit S2 des zweiten Halteelements 2 beispielsweise dadurch erreicht, dass für das zweite Halteelement 2 eine andere Dimensionierung gewählt wird, als für das erste Halteelement 1.

Figur 1 zeigt zwar bei dem zweiten Halteelement 2 einen durchgehend geringeren Querschnitt im Vergleich zum Querschnitt des ersten Halteelements 1, dies ist jedoch lediglich beispielhaft zu sehen. Selbstverständlich müssen das erste Halteelement 1 und/oder das zweite Halteelement 2 keinen durchgehend gleichbleibenden Querschnitt aufweisen. Beispielsweise kann die geringere Steifigkeit S2 für das zweite Halteelement 2 auch durch eine lokale Verringerung des Querschnittes, wie beispielsweise eine Einschnürung bzw. Querschnittverringerung an geeigneter Stelle, realisiert werden. Auch eine andere unterschiedliche Formgebung der beiden Halteelemente 1 und 2 kann selbstverständlich in Betracht kommen, solange das eben erwähnte Zusammenspiel der beiden Steifigkeiten S1 und S2 gegeben ist.

Natürlich können die beiden Halteelemente 1 und 2 auch aus unterschiedlichen Werkstoffen gefertigt sein. Die Werkstoffwahl muss dabei so getroffen werden, dass sich im Falle des gleichen Querschnittes der beiden Halteelemente 1 und 2 für das erste Halteelement 1 erfindungsgemäß eine höhere Steifigkeit S1 ergibt, als für das zweite Halteelement 2. Bekanntermaßen fließen in die Auswahl eines geeigneten Werkstoffes, neben der zuvor erwähnten, erforderlichen unterschiedlichen Steifigkeiten S1 und S2, auch die Resistenz gegen Umwelteinflüsse, Dauerfestigkeit, Wärmeleitfähigkeit, elektrische Isolationseigenschaften und dergleichen ein. Auf eine Auflistung unterschiedlicher, geeigneter Werkstoffe wird an dieser Stelle verzichtet, da die entsprechende Werkstoffwahl im Ermessen des Fachmanns liegt, und ohne weiters getroffen werden kann. Da die Vorteile der erfindungsgemäße Aufnahme 10, wie bereits erwähnt, insbesondere bei Verformungen aufgrund der Erwärmung eines aufgenommenen Bauteils 30 zum tragen kommen, ist natürlich auch bei der Werkstoffwahl in vorteilhafter Weise darauf zu achten, dass ein möglichst gutes Ableiten der entstandenen Wärme ermöglicht wird. Aus diesem Grund, sind zur Ausführung der erfindungsgemäßen Aufnahme 10, Werkstoffe mit einer besonders hohen Wärmeleitfähigkeit, wie beispielsweise Metalle, zu bevorzugen.

Weiters sei angemerkt, dass der in Figur 1 gewählte, annähernd rechteckige Querschnitt des ersten Halteelements 1 und des zweiten Halteelements 2, lediglich beispielhaft gewählt ist. Zum einen ist nicht zwangsläufig ein rechteckiger Querschnitt notwendig, zum anderen müssen erstes Halteelement 1 und zweites Halteelement 2 nicht zwangsläufig die gleiche Querschnittsgeometrie aufweisen.

Figur 2 zeigt eine vorteilhafte Ausgestaltung eines Halteelements 1 und/oder 2. Dabei ist das entsprechende Halteelement 1, 2 in einer U-förmigen Ausgestaltung dargestellt. Am ersten Ende 11 ist eine Basis 6 angeordnet. Durch zwei davon abstehenden Arme 7 und 8 wird letztlich die U-Form gebildet. Dabei weist zumindest einer der beiden Arme 7 und/oder 8, die erste Steifigkeit S1 oder die zweite Steifigkeit S2 auf.

Zwischen den beiden Armen 7 und 8 wird ein Innenbereich 16 gebildet. Ein entsprechender Bauteil 30, welcher durch die Aufnahme 10 aufgenommen wird, kann dabei zumindest teilweise im Innenbereich 16 der U-förmigen Aufnahme 10 angeordnet sein. Eine derartige U-förmige Aufnahme 10 ist daher besonders vorteilhaft zur Erfassung bzw. Befestigung eines zuvor erwähnten Bauteils 30 geeignet, da durch die Form ein Umgreifen bzw. Umfassen des aufzunehmenden Bauteils 30 ermöglicht wird, wodurch dieser besonders gut geführt bzw. gestützt werden kann. Die bereits in Zusammenhang mit Figur 1 angeführten Aufnahmebohrungen 4,5 dienen beispielhaft zur Befestigung des Bauteils 30. Zur Befestigung des ersten Endes 11 bzw. der Basis 6, ist wie bereits zuvor erwähnt und lediglich beispielhaft, zumindest eine Bohrung 9 vorgesehen. Dies erlaubt beispielsweise die Montage mittels Schraubverbindung an einer Wand oder anderen ortsfesten Struktur, wobei dazu auch andere Montagevarianten vorgesehen sein können.

Selbstverständlich kann eine derartige, U-förmige Ausgestaltung sowohl für das erste Halteelement 1 und das zweite Halteelement 2, als auch lediglich für eines der beiden Halteelemente 1 oder 2 vorgesehen sein.

Figur 3 zeigt eine besonders vorteilhafte Variante, im Zusammenhang mit der U-förmigen Ausgestaltung eines Halteelement 1 und/oder 2, wobei eine Ansicht aus Richtung das Pfeils III in Figur 2 gewählt ist.

Wie bereits erwähnt, kommt der Effekt der Ausdehnung bei der Erwärmung des aufgenommenen Bauteils 30 in der längsten Erstreckung des Bauteils 30 zwangsläufig am stärksten zum Tragen. Weist jedoch einer der beiden Arme 7 oder 8 in eine zweite Richtung 13, welche normal auf die erste Richtung 3 steht, eine zusätzliche, geringere Steifigkeit S3 auf als der andere Arm 7 oder 8 in die zweite Richtung 13, können Längenänderungen auch in diese zweite Richtung 13 definiert zugelassen werden. Diese zusätzliche, geringere Steifigkeit S3 in der zweiten Richtung 13 kann von ihrem Wert im Bereich der zweiten Steifigkeit S2 in erster Richtung 3 des zweiten Halteelements 2 liegen. Wiederum können in einem Bauteil 30 ggf. auftretende Spannungen gezielt abgebaut werden in dem eine Verformung in eine zweite Richtung 13, welche in Figur 3 in Form eines Doppelpfeils angezeigt wird, gezielt ermöglicht wird.

Wie bereits für die beiden Halteelemente 1 und 2 beschrieben, kann die zusätzliche, geringere Steifigkeit S3 beispielsweise durch die Dimensionierung des Querschnitts des jeweiligen Arms 7 oder 8 realisiert werden. In besonders vorteilhafter Weise, ist jedoch jener Arm 7 oder 8, mit der in der zweiten Richtung 13 zusätzlichen geringeren Steifigkeit S3, in der zweiten Richtung 13 geteilt ausgeführt.

Durch die entsprechende Zweiteilung, wie in Figur 3 dargestellt beispielsweise durch einen Spalt 15 mit der Breite Y, kann die zusätzliche, geringere Steifigkeit S3 entsprechend der Erfordernisse, gezielt gesteuert werden. Ein derartiger Spalt 15, kann beispielsweise auch nachträglich in den Arme 7 oder 8 eines U-förmiges Halteelements 1 und/oder 2 eingebracht werden und muss daher in den ersten Fertigungsschritten noch nicht berücksichtigt werden. Kommt es also beispielsweise zu einer Erwärmung des Bauteils 30, wird eine Verformung auch in eine zweite Richtung 13 definiert zugelassen. Entsprechend der Darstellung in Figur 3, verändert sich der Spalt 15, welcher sich durch die Zweiteilung des entsprechenden Arms oder 8 ergibt, wenn sich der Bauteil 30 in die zweite Richtung 13 entsprechend verformt. Wie bereits im Zusammenhang mit dem in Figur 1 dargestellten Abstand X zwischen ersten und zweiten Halteelement 1 und 2 angemerkt, gilt auch für den Spalt 15, dass dessen Breite Y in die zweite Richtung 13 entsprechend einer maximal zu erwartenden Verformung auszulegen ist.

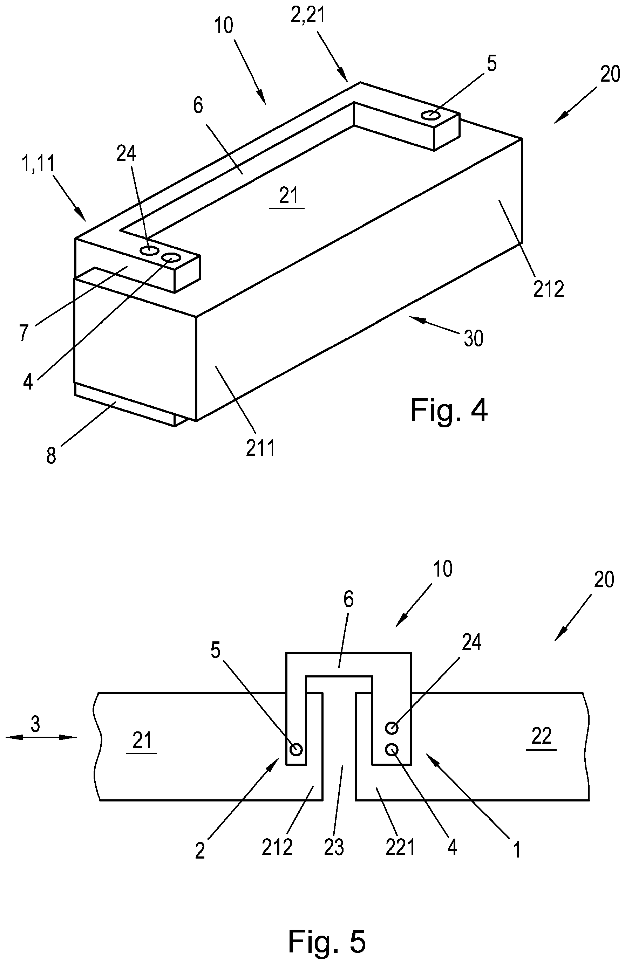

Figur 4 zeigt die Aufnahme 10 in ihrer bestimmungsgemäßen Anwendung und in einer besonders vorteilhaften Ausgestaltung, die nicht Teil der Erfindung sind. Dabei ist schematisch ein Teilbereich einer Förderstrecke 20 eines Langstatorlinearmotors dargestellt. Die Förderstrecke 20 wird aus zumindest einem ersten Statorelement 21 und zumindest einem, in Figur 4 nicht weiter dargestellten, zweiten Statorelement 22 eines Stators eines Langstatorlinearmotors und zumindest einer bereits beschriebenen Aufnahme 10 gebildet. Innerhalb einer Förderstrecke 20 sind das erste Statorelement 21 und das zweite Statorelement 22 in der ersten Richtung 3 voneinander beabstandet angeordnet. Zwischen den beiden Statorelementen 21 und 22 befindet sich das umgebende Medium, beispielsweise Luft. Das erste Statorelement 21 und das zweite Statorelement 22 weisen jeweils ein erstes Statorelementsende 211, 221 und ein zweites Statorelementsende 212, 222 auf. Dabei ist immer ein erstes Statorelementsende 211, 221 mit dem ersten Halteelement 1 der Aufnahme 10 und ein zweite Statorelementsende 212, 222 mit dem zweiten Halteelement 2 der Aufnahme 10 verbunden.

Insbesondere am Stator eines Langstatorlinearmotors kommt es während des Betriebs infolge des Stromflusses in den einzelnen Spulen zu einer entsprechenden Erwärmung. Die bereits ausführlich beschriebene Aufnahme 10, kommt daher in besonders vorteilhafter Weise bei einer Förderstrecke, welche durch einen Stator eines Langstatorlinearmotors gebildet ist, zur Anwendung.

Kommt es im Zuge des Betriebs zur Erwärmung eines Statorelements 21, 22, kann sich dieses durch die geringere Steifigkeit S2 des zweiten Halteelements 2 in eine definierte Richtung, bzw. zumindest in die erste Richtung 3 verformen. Das erste Halteelement 1 hingegen, stellt mit seiner höheren Steifigkeit S1 die Positionierung des jeweiligen Statorelements 21, 22 sicher.

Bei der in Figur 4 dargestellten Variante, wird beispielsweise bei einem ersten Statorelement 21 das erste Statorelementsende 211 am ersten Halteelement 1 einer Aufnahme 10 und das zweite Statorelementsende 212 am zweiten Halteelement 2 derselben Aufnahme 10 befestigt. Auf diese Weise wird jedem Statorelement 21, 20 eine eigene Aufnahme 10 zugeordnet. Dabei muss jedoch beachtet werden, dass für unterschiedliche Ausführungsvarianten der Statorelemente 21, 20 auch unterschiedliche Varianten an Aufnahmen 10 zur Verfügung gestellt werden müssen. Unter unterschiedlichen Ausführungsvarianten der Statorelemente 21, 20 sind dabei beispielsweise unterschiedliche Längen oder unterschiedliche Krümmungsradien (im Falle gebogener Streckenabschnitte) zur Realisierung von Kurven zu verstehen.

Die Figur 4 zeigt weiters eine besonders vorteilhafte Ausgestaltung der Aufnahme 10, da das erste Halteelement 1 mit dem zweiten Halteelement 2 an deren ersten Enden 11, 21 verbunden ist. Beispielhaft ist die U-förmige Ausführungsvariante der Aufnahme dargestellt, wobei im dargestellten Fall, sowohl das erste Halteelement 1 als auch das zweite Halteelement 2 U-förmig ausgebildet ist. Die Verbindung ist in diesem Fall, wiederum lediglich beispielhaft in Form einer für beide Halteelemente 1 und 2 gemeinsam genutzten Basis 6 dargestellt. Auf diese Weise ergibt sich eine einteilige Ausführung der Aufnahme 10. Dadurch ergibt sich wiederum eine bessere Handhabbarkeit der Aufnahme 10, da diese durch lediglich eine gemeinsame Vorrichtung gebildet wird und keine unterschiedlich ausgeführten Teile in Form des ersten Halteelements 1 und des zweiten Halteelements 2 beachtet werden müssen. Auch bei der ortsfesten Montage ergeben sich durch die Verbindung Vorteile durch die vereinfachte Handhabung. Natürlich kann die Verbindung des ersten Halteelements 1 und des zweiten Halteelements 2 auch durch einen, an deren ersten Enden 11 und 21 verschraubten Steg oder einer andersartigen Verbindung erfolgen.

Ist die Aufnahme 10 für beide Halteelemente 1 und 2, wie bereits beschrieben, U-förmig ausgeführt, ergibt sich, wie ebenfalls bereits beschrieben, zwischen den von der Basis 6 abstehenden Armen 7 und 8 ein Innenbereich 16. In diesem Fall wird das zumindest eine erste Statorelement 21 und/oder das zumindest eine zweite Statorelement 22 zumindest teilweise innerhalb des Innenbereichs 16 angeordnet, wie es für das erste Statorelement 21 auch in Figur 4 erkennbar ist.

Weiters kann vorteilhaft vorgesehen sein, dass die Förderstrecke 20 ein Führungssystem, zur Führung einer Transporteinrichtung des Langstatorlinearmotors umfasst. Um das in den Figuren nicht weiter dargestellte Führungssystem, beispielsweise in Form von Schienen, an der Aufnahme 10 befestigen zu können, ist vorteilhaft am ersten Halteelement 1 eine Befestigungsmöglichkeit in Form zumindest einer Aufnahmebohrung 24 für das Führungssystem vorgesehen, an welcher das Führungssystem befestigt ist. Durch die Montage am ersten Halteelement 1, bleibt das Führungssystem bei einer Verformung des zweiten Halteelements 2, beispielsweise infolge der Wärmedehnung des daran befestigten ersten und/oder zweiten Statorelements 21, 22, davon unbeeinflusst. Selbstverständlich können auch andere Befestigungsmöglichkeiten, wie beispielsweise Klemmsysteme oder dergleichen, zur Anwendung kommen.

Figur 5 zeigt die erfindungsgemäße Ausführung der Förderstrecke 20 mit der Aufnahme 10 bei deren bestimmungsgemäßen Verwendung. Figur 5 zeigt, ebenfalls einen Ausschnitt der bereits beschriebenen Förderstrecke 20. Entgegen der in Figur 4 gewählten Darstellung, sind jedoch beide Statorelemente 21 und 22 als Bauelemente 30 schematisch dargestellt. Dabei ist das erste Statorelement 21 und das zweite Statorelement 22 zueinander unmittelbar benachbart angeordnet.

Erfindungsgemäß ist unter "unmittelbar benachbarten angeordnet" zu verstehen, dass zwischen ersten Statorelement 21 und zweiten Statorelement 22 kein weiterer Teil angeordnet ist. Dabei ist jedoch zu berücksichtigen, dass sich das erste Statorelement 21 und das zweite Statorelement 22 nicht gegenseitig berühren. Zwischen dem ersten Statorelement 21 und zweitens Statorelement 22 befindet sich somit lediglich ein, sich in die erste Richtung 3 erstreckender Spalt 23. Diese Spalt 23 erlaubt, eine entsprechende Ausdehnung des jeweiligen Statorelements 21, 22, wenn sich dieses, wie bereits beschrieben, in die erste Richtung 3 ausdehnt. Je nach Länge, Form, Querschnitt der Statorelemente 21, 23, kann die Breite des Spalts 23 in die erste Richtung entsprechend passend gewählt werden.

Erfindungsgemäß wird das erste Statorelementsende 221 des zweiten Statorelements 22 mit dem ersten Halteelement 1 der Aufnahme 10, und das zweite Statorelementsende 212 des ersten Statorelements 21 mit dem zweiten Halteelement 2 der Aufnahme 10 verbunden. Wie in Figur 5 erkennbar ist, ergibt sich dadurch eine äußerst kompakte Bauweise. Dies führt zu reduzierten Materialaufwand und vereinfachte Lagerhaltung. Der primäre Vorteil besteht jedoch darin, dass für unterschiedliche Längen oder Formen der einzelnen Statorelemente 21, 22, keine unterschiedlichen Aufnahmen 10 zur Verfügung gestellt werden müssen. Bei dieser Variante ist es für die Aufnahme 10 unerheblich, ob beispielsweise einzelne Statorelemente 21, 22, miteinander verbunden werden, welche einen gewissen Radius aufweisen, um beispielsweise Kurven in der Förderstrecke 20 zu realisieren. Unterschiedliche Ausführungen der Aufnahmen 10, wie es eine Variante welche in Figur 4 dargestellt wird, erforderlich macht, sind in diesem Fall nicht notwendig.

Die Aufnahme 10, erlaubt es einem Bauteil 30, insbesondere ein erstes und/oder zweites Statorelement 21, 22 eines Stators eines Langstatorlinearmotors aufzunehmen bzw. an einer ortsfesten Struktur zu befestigen. Durch die Ausgestaltung der Aufnahme werden mechanische Spannungen, insbesondere solche die aufgrund der Erwärmung des Bauteils 30 auftreten, möglichst verhindert oder zumindest reduziert.

## Patentansprüche

1. Förderstrecke (20) gebildet aus zumindest einem ersten Statorelement (21) und zumindest einem zweiten Statorelement (22) eines Stators eines Langstatorlinearmotors und zumindest einer Aufnahme (10),
wobei die zumindest eine Aufnahme (10) ein erstes Halteelement (1) und ein zweites Halteelement (2) aufweist, wobei das erste Halteelement (1) und das zweite Halteelement (2) nebeneinander und in einer ersten Richtung (3) voneinander beabstandet angeordnet sind, wobei das erste Halteelement (1) mit dem zweiten Halteelement (2) an deren ersten Enden (11, 21) verbunden ist,
wobei das erste und das zweite Statorelement (21, 22) in der ersten Richtung (3) voneinander beabstandet sind, wobei das erste Statorelement (21) und das zweite Statorelement (22) unmittelbar benachbart sind, wobei das erste Statorelement (21) und das zweite Statorelement (22) jeweils ein erstes Statorelementsende (211, 221) und ein zweites Statorelementsende (212, 222) aufweist,
wobei sich das erste Statorelementsende (221) des zweiten Statorelements (22) und das zweite Statorelementsende (212) des ersten Statorelements (21) gegenüberstehen, wobei das erste Statorelementsende (221) des zweiten Statorelements (22) mit dem ersten Halteelement (1) der Aufnahme (10), und das zweite Statorelementsende (212) des ersten Statorelements (21) mit dem zweiten Halteelement (2) der Aufnahme (10) verbunden ist,
**dadurch gekennzeichnet, dass** das erste Halteelement (1) in dieser ersten Richtung (3) eine erste Steifigkeit (S1) und das zweite Halteelement (2) in dieser ersten Richtung (3) eine zweite Steifigkeit (S2), welche geringer als die erste Steifigkeit (S1) ist, aufweist.

2. Förderstrecke (20) nach Anspruch 1, **dadurch gekennzeichnet, dass** jedes Halteelement (1, 2) das erste Ende (11, 21), welches im bestimmungsgemäßen Einsatz der Aufnahme ortsfest und unbeweglich angeordnet ist, und ein zweites Ende (12, 22), welches zumindest in die erste Richtung (3) beweglich ist, aufweist.

3. Förderstrecke (20) nach Anspruch 2, **dadurch gekennzeichnet, dass** zumindest ein Halteelement (1, 2) U-förmig ausgebildet ist, mit einer am ersten Ende (11, 21) angeordneten Basis (6) und zwei davon abstehenden Armen (7, 8), wobei zumindest ein Arm (7, 8) die erste Steifigkeit (S1) oder die zweite Steifigkeit (S2) aufweist.

4. Förderstrecke (20) nach Anspruch 3, **dadurch gekennzeichnet, dass** ein Arm (7, 8) in eine zweite Richtung (13), normal auf die erste Richtung (3), eine zusätzliche geringere Steifigkeit (14) aufweist als der andere Arm (7, 8).

5. Förderstrecke (20) nach Anspruch 4, **dadurch gekennzeichnet, dass** der Arm (7, 8) mit der in der zweiten Richtung (13) zusätzlichen geringeren Steifigkeit (14), in der zweiten Richtung (13) geteilt ausgeführt ist.

6. Förderstrecke (20) nach einem der Ansprüche 2 bis 5, **dadurch gekennzeichnet, dass** die U-förmige Brücke zwischen den von der Basis (6) abstehenden Armen (7, 8) einen Innenbereich (16) aufweist, und das zumindest eine erste Statorelement (21) und/oder das zumindest eine zweite Statorelement (22) zumindest teilweise innerhalb des Innenbereichs (16) angeordnet ist.

7. Förderstrecke (20) nach zumindest einem der Ansprüche 1 bis 6, **dadurch gekennzeichnet, dass** die Förderstrecke (20) ein Führungssystem zur Führung einer Transporteinrichtung umfasst, am ersten Halteelement (1) eine Befestigungsmöglichkeit (24) in Form zumindest einer Aufnahmebohrung für das Führungssystem vorgesehen ist und das Führungssystem daran befestigt ist.

## Claims

1. A conveyor line (20) formed from at least a first stator element (21) and at least a second stator element (22) of a stator of a long stator linear motor and at least a holder (10), wherein the at least one holder (10) has a first retaining element (1) and a second retaining element (2), wherein the first retaining element (1) and the second retaining element (2) are arranged side by side and spaced apart from each other in a first direction (3), wherein the first retaining element (1) is connected to the second retaining element (2) at their first ends (11, 21), wherein the first and the second stator element (21, 22) are arranged spaced apart from each other in the first direction (3), wherein the first stator element (21) and the second stator element (22) are directly adjacent, wherein the first stator element (21) and the second stator element (22) each comprise a first stator element end (211, 221) and a second stator element end (212, 222), wherein the first stator element end (221) of the second stator element (22) and the second stator element end (212) of the first stator element (21) are opposite to each other, wherein the first stator element end (221) of the second stator element (22) is connected to the first retaining element (1) of the holder (10) and the second stator element end (212) of the first stator element (21) is connected to the second retaining element (2) of the holder (10), **characterized in that** the first retaining element (1) has a first rigidity (S1) in this first direction (3) and the second retaining element (2) has a second rigidity (S2) in this first direction (3), which is lower than the first rigidity (S1).

2. The conveyor line (20) according to claim 1, **characterized in that** each retaining element (1, 2) has the first end (11, 21), which in the intended use of the holder is arranged stationary and immobile, and a second end (12, 22), which is movable at least in the first direction (3).

3. The conveyor line (20) according to claim 2, **characterized in that** at least one retaining element (1, 2) is formed U-shaped with a base (6) arranged at the first end (11, 21) and two arms (7, 8) protruding therefrom, wherein at least one arm (7, 8) comprises the first rigidity (S1) or the second rigidity (S2).

4. The conveyor line (20) according to claim 3, **characterized in that** one arm (7, 8) comprises in a second direction (13), normal to the first direction (3), an additional lower rigidity (14) than the other arm (7, 8).

5. The conveyor line (20) according to claim 4, **characterized in that** the arm (7, 8) with the additional lower rigidity (14) in the second direction (13) is divided in the second direction (13).

6. The conveyor line (20) according to one of the claims 2 to 5, **characterized in that** the U-shaped bridge between the arms (7, 8) protruding from the base (6) comprises an inner area (16), and the at least one first stator element (21) and/or the at least one second stator element (22) is arranged at least partially within the inner area (16).

7. The conveyor line (20) according to at least one of the claims 1 to 6, **characterized in that** the conveyor line (20) comprises a guide system to guide a transportation facility, on the first retaining element (1) a mounting option (24) in the form of at least one holder bore is provided for the guide system and the guide system is attached thereon.

## Revendications

1. Voie de transport (20) formée par au moins un premier élément de stator (21) et au moins un second élément de stator (22) d'un stator d'un moteur linéaire à stator long et au moins un logement (10),
dans laquelle l'au moins un logement (10) présente un premier élément de retenue (1) et un second élément de retenue (2), le premier élément de retenue (1) et le second élément de retenue (2) étant disposés côte à côte et espacés l'un de l'autre dans une première direction (3), le premier élément de retenue (1) étant relié au second élément de retenue (2) au niveau de ses premières extrémités (11, 21),
dans laquelle les premier et second éléments de stator (21, 22) sont espacés l'un de l'autre dans la première direction (3), le premier élément de stator (21) et le second élément de stator (22) étant immédiatement adjacents, le premier élément de stator (21) et le second élément de stator (22) présentant respectivement une première extrémité d'élément de stator (211, 221) et une seconde extrémité d'élément de stator (212, 222), la première extrémité d'élément de stator (221) du second élément de stator (22) et la seconde extrémité d'élément de stator (212) du premier élément de stator (21) étant opposées, la première extrémité d'élément de stator (221) du second élément de stator (22) étant reliée au premier élément de retenue (1) du logement (10), et la seconde extrémité d'élément de stator (212) du premier élément de stator (21) étant reliée au second élément de retenue (2) du logement (10),
**caractérisée en ce que** le premier élément de retenue (1) présente une première rigidité (S1) dans ladite première direction (3) et le second élément de retenue (2) présente une seconde rigidité (S2) inférieure à la première rigidité (S1) dans ladite première direction (3).

2. Voie de transport (20) selon la revendication 1, **caractérisée en ce que** chaque élément de retenue (1, 2) présente la première extrémité (11, 21), laquelle est disposée fixe et immobile lors de l'utilisation prévue du logement, et une seconde extrémité (12, 22), laquelle est mobile au moins dans la première direction (3).

3. Voie de transport (20) selon la revendication 2, **caractérisée en ce qu'**au moins un élément de retenue (1, 2) est en forme de U et comporte une base (6) disposée au niveau de la première extrémité (11, 21) et deux bras (7, 8) faisant saillie depuis ladite base, au moins un bras (7, 8) présentant la première rigidité (S1) ou la seconde rigidité (S2).

4. Voie de transport (20) selon la revendication 3, **caractérisée en ce qu'**un bras (7, 8), dans une seconde direction (13) perpendiculaire à la première direction (3), présente une rigidité (14) supplémentaire inférieure à celle de l'autre bras (7, 8).

5. Voie de transport (20) selon la revendication 4, **caractérisée en ce que** le bras (7, 8) comportant la rigidité (14) supplémentaire inférieure dans la seconde direction (13) est divisé dans la seconde direction (13).

6. Voie de transport (20) selon l'une des revendications 2 à 5, **caractérisée en ce que** le pont en forme de U entre les bras (7, 8) faisant saillie depuis la base (6) présente une zone intérieure (16) et l'au moins un premier élément de stator (21) et/ou l'au moins un second élément de stator (22) sont disposés au moins partiellement à l'intérieur de la zone intérieure (16).

7. Voie de transport (20) selon au moins l'une des revendications 1 à 6, **caractérisée en ce que** la voie de transport (20) comprend un système de guidage permettant de guider un dispositif de convoyage, une possibilité de fixation (24) est prévue sur le premier élément de retenue (1) sous la forme d'au moins un alésage de réception pour le système de guidage et le système de guidage est fixé audit alésage de réception.
